# EUROPÄISCHE PATENTANMELDUNG

(11) **EP 3 978 172 A1**
(43) Veröffentlichungstag der Anmeldung: **06.04.2022**
(21) Anmeldenummer: 21198853.0
(22) Anmeldetag: 24.09.2021
(51) Int. Cl.: B23C 5/10

(54) **FRÄSSTIFT**

(30) Priorität: 01.10.2020 DE 102020125731
(71) Anmelder: Hoffmann Engineering Services GmbH, 81241 München (DE)
(72) Erfinder: MÖLLER, Michael, 85296 Rohrbach (DE); ROSSAINT, Jens, 82152 Krailling (DE)
(74) Vertreter: Seemann & Partner Patentanwälte mbB

(57) **Zusammenfassung**

Die Erfindung ist durch einen Frässtift (10) mit einer Anzahl von Zähnen (14), wobei die Zähne (14) mit jeweils einer Schneide (15) ausgebildet sind, wobei der Frässtift (10) einen Nenndurchmesser (21) aufweist, wobei das Verhältnis der Anzahl der Zähne (14) zu dem Nenndurchmesser (21) in einem Bereich von 1/mm bis zu 8/mm, insbesondere von 1/mm bis zu 6/mm, insbesondere 1,5/mm bis zu 3/mm, liegt und wobei ein Drallwinkel (20) der Schneiden (15) vorgesehen ist, der in einem Bereich vom 35° bis 45° liegt, wobei die Zähne (14) über den Umfang (22) des Frässtifts (10) verteilt angeordnet sind, wobei wenigstens ein Zahn (14) eine Ungleichteilung in einem Bereich von 0,2° bis 0,5° aufweist, angegeben.

## Beschreibung

Die Erfindung betrifft einen Frässtift mit einer Anzahl von Zähnen, wobei die Zähne mit jeweils einer Schneide ausgebildet sind, wobei der Frässtift einen Nenndurchmesser aufweist.

Übliche Frässtifte werden mit um den Umfang vorgesehenen Schneiden mit Drallwinkeln zwischen 20° und 30° gefertigt. Um die Späne kurz zu halten, sind hierzu ein oder mehrere Spanbrecher je Schneide vorgesehen, der oder die beispielsweise durch einen Querhieb in den Schneiden bzw. den Zähnen, auf denen die Schneiden angeordnet sind, realisiert ist.

Eine Art von Frässtift ist beispielsweise in EP 2 776 194 B1 gezeigt. Dort sind entsprechende Spanbrecher vorgesehen.

DE 10 2005 002 698 B4 offenbart einen Fräser mit zehn Schneiden bzw. zehn Zähnen, deren Teilungen, d.h. deren Anordnung, über den Umfang des Fräsers verteilt ungleichmäßig ist. Hierdurch wird im Betrieb eine geringe Neigung zur Schwingung oder Resonanz erzielt.

Verschiedene, auch relativ hohe Drallwinkel von Schneiden sind bei einem Fräswerkzeug gemäß WO 2014/166731 A1 offenbart.

US 2009/0136308 A1 zeigt ein rotierendes Fräswerkzeug zum Abtragen von Material. Gemäß einer Ausführungsform ist ein Drallwinkel von 38° vorgesehen.

In US 3 217 382 A ist eine Hochgeschwindigkeitsrotationsfeile gezeigt. Die Feile weist gemäß einer Ausführungsform einen kleinen positiven Spanwinkel auf.

US 2017/0100786 A1 offenbart einen Langlochfräser. Der Winkel zwischen den verschiedenen Schneidkanten ist ungleichmäßig.

Es ist Aufgabe der vorliegenden Erfindung, die Leistungsfähigkeit von Frässtiften, insbesondere die Menge des Abtrags, zu verbessern sowie einen ruhigeren Lauf vorzusehen als auch die Eignung des Frässtifts für mehrere Materialien vorzusehen.

Gelöst wird diese Aufgabe durch einen Frässtift mit einer Anzahl von Zähnen, wobei die Zähne mit jeweils einer Schneide ausgebildet sind, wobei der Frässtift einen Nenndurchmesser aufweist, wobei das Verhältnis der Anzahl der Zähne zu dem Nenndurchmesser in einem Bereich von 1 zu 1 mm bis 8 zu 1 mm liegt und wobei ein Drallwinkel der Schneiden vorgesehen ist, der in einem Bereich von 35° bis 45° liegt, wobei die Zähne über den Umfang des Frässtifts verteilt angeordnet sind, wobei wenigstens ein Zahn eine Ungleichteilung in einem Bereich von 0,2° bis 0,5° aufweist.

Durch diese Maßnahmen sind ein ruhiger Lauf und ein guter Abtrag möglich. Vorzugsweise weist der Frässtift eine Feinverzahnung auf.

Vorzugsweise liegt das Verhältnis der Anzahl der Zähne (14) zu dem Nenndurchmesser (21) in einem Bereich von 1 zu 1 mm bis 6 zu 1 mm, insbesondere 1 zu 1 mm bis 4 zu 1 mm, insbesondere 1,5 zu 1 mm bis 3 zu 1 mm.

Vorzugsweise liegt der Drallwinkel in einem Bereich von 38° bis 42°. Insbesondere vorzugsweise liegt der Drallwinkel in einem Bereich von 39° bis 41°, vorzugsweise in einem Bereich von 39,5° bis 40,5°. Vorzugsweise ist der Drallwinkel 40°.

Im Rahmen dieser Erfindung ist ein Nenndurchmesser insbesondere ein Außendurchmesser.

Da die Zähne über den Umfang des Frässtifts verteilt angeordnet sind, wobei wenigstens ein Zahn eine Ungleichteilung in einem Bereich von 0,2° bis 0,5° aufweist, ist ein sehr ruhiger Lauf möglich. Die Ungleichteilung ist somit vorzugsweise relativ klein. Beispielsweise wäre eine gleichmäßige Teilung bei einem Frässtift mit 17 Zähnen bei 22,5°. Wenigstens ein Zahn hat damit eine Teilung von 22° bis 22,3° oder 22,7° bis 23°. Vorzugsweise weisen mehrere Zähne wenigstens eine entsprechende Ungleichteilung auf.

Vorzugsweise liegt die Ungleichteilung des wenigstens einen Zahns, vorzugsweise mehrerer Zähne, in einem Bereich von 0,5 % bis 2,3 %, insbesondere vorzugsweise in einem Bereich von 1 % bis 2 %.

Vorzugsweise sind 10 bis 200 Zähne, insbesondere vorzugsweise 15 bis 150 Zähne, insbesondere vorzugsweise 17 bis 120 Zähne, insbesondere vorzugsweise 20 bis 100 Zähne, insbesondere vorzugsweise 25 bis 70 Zähne, vorgesehen. Besonders bevorzugte Beispiele sind 15 Zähne, 16 Zähne, 17 Zähne, 18 Zähne, 19 Zähne, 20 Zähne oder 21 Zähne. 18 bis 36 Zähne sind besonders bevorzugt bei einem Nenndurchmesser von 12 mm. Je nach Größe des Frässtifts bzw. Durchmesser des Frässtifts sind entsprechend mehr oder weniger Zähne vorgesehen. Je größer der Durchmesser, umso mehr Zähne sind vorzugsweise vorgesehen.

Besonders bevorzugt ist es, wenn die Zähne einen Spanwinkel in einem Bereich von 2° bis 5°, insbesondere 3° bis 4°, aufweisen. Hierdurch ist ein hoher Abtrag möglich. Ein noch höherer Abtrag ist dann gegeben, wenn vorzugsweise die Zähne einen Keilwinkel in einem Bereich von 58° bis 67°, insbesondere 60° bis 65°, insbesondere 62° bis 63°, aufweisen.

Vorzugsweise weisen die Zähne eine Zahntiefe von 0,5 mm bis 1 mm, insbesondere 0,6 mm bis 0,9 mm, insbesondere 0,7 mm bis 0,8 mm, auf. Hierdurch ist eine sehr lange Standzeit gegeben.

Vorzugsweise ist der Frässtift spanbrecherfrei. Der Frässtift weist somit beispielsweise keine Querhiebe auf.

Vorzugsweise sind die Schneiden und/oder die Zähne von der Stirnseite eines Fräskopfes des Frässtifts bis zur Rückseite des Fräskopfes durchgehend unterbrechungsfrei ausgestaltet.

Vorzugsweise sind die Zähne wendelförmig auf dem Frässtift von der Stirnseite zur Rückseite des Fräskopfes ausgebildet, wobei sich die Wendel über wenigstens einen halben Umlauf des Umfangs des Fräskopfes erstreckt. Im Rahmen der Erfindung ist unter einem Umfang diesbezüglich auch eine Mantelfläche des Fräskopfes zu verstehen.

Vorzugsweise sind die Zähne auf einem Fräskopf ausgebildet, wobei der Fräskopf insbesondere an einem Schaft angelötet ist. Hierdurch ist eine besonders kostengünstige und verlässliche Fertigung möglich.

Vorzugsweise ist der Fräskopf aus einem Hartmetall hergestellt. Vorzugsweise ist der Fräskopf ferner mit einer diamantartigen Kohlenstoffbeschichtung (Diamond like carbon coating) versehen.

Vorzugsweise weist der Frässtift und/oder der Fräskopf eine plane Stirnseite auf. Der Fräskopf bzw. der Frässtift ist vorzugsweise zylindrisch.

Alternativ hat der Fräskopf bzw. der Frässtift eine Tropfenform, eine Kegelform, eine Halbkugelform, eine Stumpfkegelform oder ist bauchig.

Vorzugsweise ist der Drallwinkel der Zähne bzw. Schneiden von der Stirnseite bis zur Rückseite des Fräskopfes konstant. Vorzugsweise ist der Drallwinkel jeder Schneide bzw. jedes Zahns gleich.

Die Spangeometrie des Frässtifts ist vorzugsweise mit nur einer Schleifscheibe geschliffen hergestellt.

Vorzugsweise ist der Frässtift wenigstens teilweise, vorzugsweise ein Fräskopf des Frässtifts, mit einer Hartstoffschicht beschichtet. Die Hartstoffschicht kann eine diamantartige Kohlenstoffbeschichtung sein.

Vorzugsweise ist der Drallwinkel über die Länge des Frässtifts variierend ausgebildet, wobei insbesondere ein maximaler Drallwinkel von 45° vorgesehen ist. Vorzugsweise ist der Drallwinkel zu der Stirnseite hin maximal und verringert sich zur Rückseite. Alternativ kann der Drallwinkel zu der Stirnseite hin zunächst kleiner als ein maximaler Drallwinkel von 35° bis 45°, insbesondere 38° bis 42° sein, zur Rückseite zunächst etwas anwachsen, um danach wieder zur Rückseite abzunehmen. Ferner kann der Drallwinkel alternativ zur Stirnseite hin minimal sein und zur Rückseite hin anwachsen.

Vorzugsweise ist ein minimaler Drallwinkel von 0°, insbesondere 10°, insbesondere 15°, insbesondere 20°, insbesondere 25°, insbesondere 30°, insbesondere 35°, vorgesehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht eines erfindungsgemäßen Frässtiftes und

- Fig. 2: eine schematische Draufsicht auf die Stirnseite des erfindungsgemäßen Frässtiftes aus Fig. 1.

In den Zeichnungen sind jeweils gleiche oder gleichartige Elemente und/oder Teile mit denselben Bezugsziffern versehen, so dass von einer erneuten Vorstellung jeweils abgesehen wird.

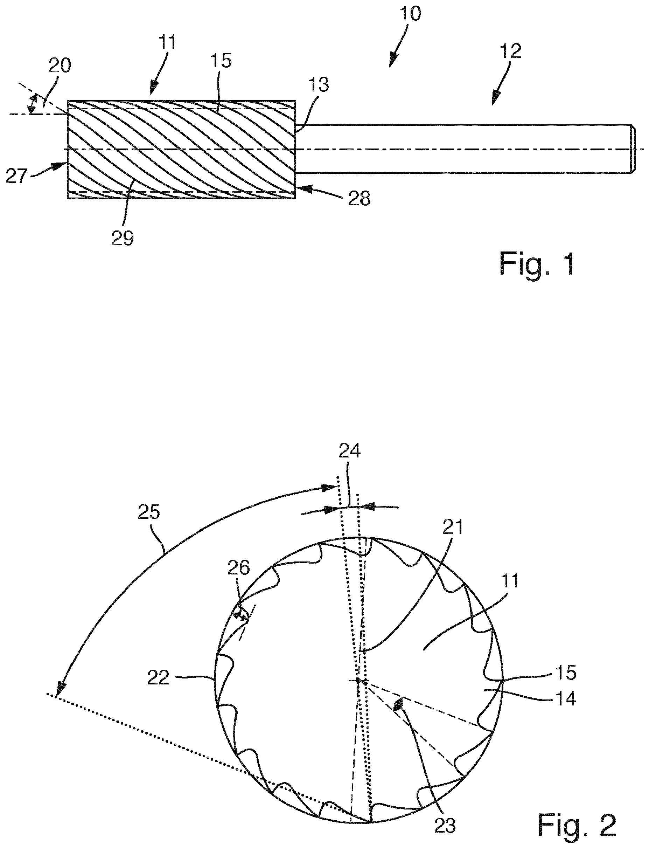

Fig. 1 zeigt einen erfindungsgemäßen Frässtift 10, der einen Fräskopf 11 und einen Schaft 12 aufweist. An der Befestigungsstelle 13 ist der Schaft 12 mit dem Fräskopf 11 verbunden, vorzugsweise angelötet. Der Fräskopf 11 weist eine Stirnseite 27 und eine Rückseite 28 auf. Auf dem Fräskopf 11 sind Schneiden 15 vorgesehen, die wendelförmig von der Stirnseite 27 zur Rückseite 28 angeordnet sind. Es sind mehrere Wendeln 29 gezeigt, wovon eine Wendel 29 ist in Fig. 1 mit einem Bezugszeichen versehen ist. In diesem Ausführungsbeispiel verlaufen die Wendeln 29 von der Stirnseite 27 zur Rückseite 28 über etwas mehr als 180° über den Umfang des Fräskopfes 11.

Fig. 2 zeigt eine schematische Ansicht der Stirnseite 27 des Fräskopfes 11. Es sind 17 Zähne 14 und damit 17 Schneiden 15 dargestellt, die über den Umfang 22 verteilt angeordnet sind. Die Teilung 23 beträgt in etwa 22,5°, variiert aber gemäß der Erfindung um 0,2° bis 0,5°. Bei einer höheren Anzahl von Zähnen ist die Ungleichteilung in einem etwas kleineren Bereich angesiedelt. Beispielsweise liegt die Ungleichteilung bei 34 Zähnen in einem Bereich von 0,1° bis 0,25°. Entsprechend kann sich die Ungleichteilung linear mit der Anzahl der Zähne ändern. Diese kann sich allerdings auch logarithmisch mit höherer Anzahl von Zähnen ändern.

In Fig. 2 ist auch ein Spanwinkel 24 angedeutet. Dieser liegt gemäß diesem Ausführungsbeispiel bei 3° bis 4°.

Ein Keilwinkel 25 liegt gemäß der Erfindung vorzugsweise bei 60° bis 65°. Die Zahntiefe liegt gemäß diesem Ausführungsbeispiel bei 0,7 mm bis 0,8 mm. Zudem ist der Nenndurchmesser, der auch als Außendurchmesser bezeichnet werden kann, in Fig. 2 dargestellt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Frässtift
- 11: Fräskopf
- 12: Schaft
- 13: Befestigungsstelle
- 14: Zahn
- 15: Schneide
- 20: Drallwinkel
- 21: Nenndurchmesser
- 22: Umfang
- 23: Teilung
- 24: Spanwinkel
- 25: Keilwinkel
- 26: Zahntiefe
- 27: Stirnseite
- 28: Rückseite
- 29: Wendel

## Patentansprüche

1. Frässtift (10) mit einer Anzahl von Zähnen (14), wobei die Zähne (14) mit jeweils einer Schneide (15) ausgebildet sind, wobei der Frässtift (10) einen Nenndurchmesser (21) aufweist, wobei das Verhältnis der Anzahl der Zähne (14) zu dem Nenndurchmesser (21) in einem Bereich von 1 zu 1 mm bis 8 zu 1 mm liegt und wobei ein Drallwinkel (20) der Schneiden (15) vorgesehen ist, der in einem Bereich von 35° bis 45°, insbesondere 38° bis 42°, liegt, wobei die Zähne (14) über den Umfang (22) des Frässtifts (10) verteilt angeordnet sind, wobei wenigstens ein Zahn (14) eine Ungleichteilung in einem Bereich von 0,2° bis 0,5° aufweist.

2. Frässtift (10) nach Anspruch 1, **dadurch gekennzeichnet, dass** das Verhältnis der Anzahl der Zähne (14) zu dem Nenndurchmesser (21) in einem Bereich von 1 zu 1 mm bis 6 zu 1 mm, insbesondere 1 zu 1 mm bis 4 zu 1 mm, insbesondere 1,5 zu 1 mm bis 3 zu 1 mm, liegt

3. Frässtift (10) nach Anspruch 1 oder 2, **dadurch gekennzeichnet, dass** der Drallwinkel (20) in einem Bereich von 39° bis 41° liegt.

4. Frässtift (10) nach einem der Ansprüche 1 bis 3, **dadurch gekennzeichnet, dass** 10 bis 200 Zähne (14), insbesondere 15 bis 150 Zähne (14), insbesondere 17 bis 120 Zähne (14), insbesondere 20 bis 100 Zähne (14), insbesondere 25 bis 70 Zähne (14), vorgesehen sind.

5. Frässtift (10) nach einem der Ansprüche 1 bis 4, **dadurch gekennzeichnet, dass** die Zähne (14) einen Spanwinkel (24) in einem Bereich von 2° bis 5°, insbesondere 3° bis 4°, aufweisen.

6. Frässtift (10) nach einem der Ansprüche 1 bis 5, **dadurch gekennzeichnet, dass** die Zähne (14) einen Keilwinkel (25) in einem Bereich von 58° bis 67°, insbesondere 60° bis 65°, insbesondere 62° bis 63°, aufweisen.

7. Frässtift (10) nach einem der Ansprüche 1 bis 6, **dadurch gekennzeichnet, dass** die Zähne (14) eine Zahntiefe (26) von 0,5 mm bis 1 mm, insbesondere 0,6 mm bis 0,9 mm, insbesondere 0,7 mm bis 0,8 mm, aufweisen.

8. Frässtift (10) nach einem der Ansprüche 1 bis 7, **dadurch gekennzeichnet, dass** der Frässtift (10) spanbrecherfrei ist.

9. Frässtift (10) nach einem der Ansprüche 1 bis 8, **dadurch gekennzeichnet, dass** die Zähne (14) wendeiförmig auf dem Frässtift (10) von der Stirnseite (27) zur Rückseite (28) eines Fräskopfes (11) des Frässtiftes (10) ausgebildet sind, wobei sich die Wendel (29) über wenigstens einen halben Umlauf des Umfangs (22) des Fräskopfes (11) erstreckt.

10. Frässtift (10) nach einem der Ansprüche 1 bis 9, **dadurch gekennzeichnet, dass** die Zähne (14) auf einem Fräskopf (11) ausgebildet sind, wobei der Fräskopf (11) an einem Schaft (12) angelötet ist.

11. Frässtift (10) nach Anspruch 10, **dadurch gekennzeichnet, dass** der Fräskopf (11) aus einem Hartmetall hergestellt ist.

12. Frässtift (10) nach einem der Ansprüche 1 bis 11, **dadurch gekennzeichnet, dass** der Frässtift (10) wenigstens teilweise, vorzugsweise ein Fräskopf (11) des Frässtifts (10), mit einer Hartstoffschicht beschichtet ist.

13. Frässtift (10) nach einem der Ansprüche 1 bis 12, **dadurch gekennzeichnet, dass** der Drallwinkel über die Länge des Frässtifts variiert.

14. Frässtift (10) nach Anspruch 13, **dadurch gekennzeichnet, dass** ein minimaler Drallwinkel von 0°, insbesondere 10°, insbesondere 15°, insbesondere 20°, insbesondere 25°, insbesondere 30°, vorgesehen ist.
